# EUROPEAN PATENT APPLICATION

(11) **EP 2 031 883 A1**
(43) Date of publication of application: **04.03.2009**
(21) Application number: 08748640.3
(22) Date of filing: 21.05.2008
(51) Int. Cl.: H04Q 1/00

(54) **METHOD, SYSTEM, NETWORK DEVICE, AND MOBILE DATA SERVICE MANAGEMENT PLATFORM FOR DOWN SENDING CONTENT**

(30) Priority: 08.06.2007 CN 200710110700
(71) Applicant: Huawei Technologies Co., Ltd., Longgang District, Shenzhen Guangdong 518129 (CN)
(72) Inventor: PENG, Jin, Guangdong 518129 (CN); YANG, Jialong, Guangdong 518129 (CN)
(74) Representative: Thun, Clemens
(86) International application number: PCT/CN2008/071034
(87) International publication number: WO 2008/151535

(57) **Abstract**

A content delivery method and system, a network device, and a Mobile Data Service Platform (MDSP). The content delivery method includes: receiving a service request that carries a content for approval and a standard content; searching for the digest of the standard content corresponding to the standard content identifier, where the digest of the standard content is stored at the time of approving the standard content and the standard content corresponds to the standard content identifier; generating a digest of the content for approval; judging whether the digest of the content for approval is consistent with the digest of the standard content; if consistent, forwarding the service request; if not consistent, terminating the process of delivering the content. The content delivery system, network device and MDSP disclosed herein implement the content delivery method under the present invention. The application of the present invention ensures that the content which is approved is sent to the user, thus ensuring authenticity and integrity of the content.

## Description

### Field of the Invention

The present invention relates to communication technologies, and in particular, to a content delivery method and system, a network device, and a Mobile Data Service Platform (MDSP).

### Background of the Invention

With the rapid development of mobile communication technologies, mobile data services are developing rapidly. Mobile data services are data services based on a mobile communication network, for example, Short Message Service (SMS), Multimedia Message Service (MMS), mobile payment service, streaming service, and mobile location service. Mobile data services not only inherit the characteristics of mobile communication, namely, quickness, individualization, mobility, and being available anytime anywhere, but also draw upon the merits of the Internet, namely, multimedia mode, mass information, convenient search, and being borderless. Mobile data services help people access rich information resources, and break spatial obstruction of information transmission.

As there are more and more types of mobile data services, operators strongly require proper management on Service Providers (SPs) and services. The conventional MDSP is capable of managing users, SPs, and contents of a Content Provider (CP). The process of an SP/CP delivering a content to a user is as follows:
(1) Content registration process, in which the content registered with the MDSP can be delivered to the user; in the following Steps, it is supposed that the service is provided by an SP, although a CP may also provide services for the user in practice:
   1. The SP sends a content registration request to the MDSP and the request carries a Service Provider Identifier (SPID), a service ID, and a content.
   2. The MDSP is to approve the content submitted by the SP and a Content ID is generated and stored, if the content is approved.
   3. The MDSP sends a content registration response to the SP and the registration response message carries an identifier which indicates whether the content registration succeeds. The registration response message carries the ContentID generated by the MDSP, if the content is approved.
(2) Service delivering process, in which the SP is still taken as an example.
   1. The SP sends a service request to the service gateway and the request carries a UserID, SPID, ServiceID, ContentID, and content.
   2. The service gateway sends a service authentication request to the MDSP and the request carries a UserID, SPID, ServiceID, and ContentID.
   3. Based on the received UserID, SPID, ServiceID and ContentID, the MDSP authenticates the service request. The authentication process is: the MDSP queries the database about whether the SP is allowed to send the content of the service to the user according to the UserID, SPID, ServiceID, and ContentID.
   4. The MDSP sends a service authentication response to the service gateway and the response carries an identifier indicating whether the service authentication succeeds.
   5. The service gateway sends a service request to the service server and the request carries a UserID and content, if the service authentication succeeds.
   6. The service server delivers the content to the user terminal correlated with the UserID.

Through the foregoing technical solution, the CP/SP may send the content to the user. However, in the research process, the inventor finds at least the following defects in the conventional art: After the CP/SP registers a content with the MDSP and the MDSP is to approve the content, the information related to the content is stored, for example, ContentID, corresponding CPID/SPID, and ServiceID, but the content itself is still stored at the CP/SP. Therefore, in the process of delivering a content, the MDSP authenticates the service request only based on the UserID, SPID, ServiceID, and ContentID, without checking the authenticity or integrity of the content. In fact, the CP/SP may replace the content maliciously, and the content may be damaged in the delivery process due to network factors. Consequently, the authenticity and integrity of the content from the CP/SP are not ensured.

### Summary of the Invention

Therefore, it is necessary to provide a content delivery method and system, a network device, and an MDSP. Through the technical solution provided in embodiments of the present invention, the content delivered by the SP/CP may be checked.

A content approving method provided in an embodiment of the present invention includes:
receiving a content registration request, where the content registration request carries a standard content;
approving the standard content, and generating and storing an identifier and a digest of the standard content if the approval is passed; and
sending a content registration response, where the content registration response carries the identifier of the standard content.

A content delivery method provided in an embodiment of the present invention includes:
receiving a service request that carries a content for approval and a standard content identifier;
searching for a digest of a standard content corresponding to the standard content identifier, where the digest of the standard content is stored at the time of approving the standard content and the standard content corresponds to the standard content identifier;
generating a digest of the content for approval; and
judging whether the digest of the content for approval is consistent with the digest of the standard content, and if consistent, forwarding the service request.

Accordingly, a network device provided in an embodiment of the present invention includes:
a service request receiving unit, adapted to receive a service request, where the service request carries a content for approval and a standard content identifier;
a triggering request sending unit, adapted to send a triggering request, where the triggering request carries the standard content identifier;
a triggering response receiving unit, adapted to receive a triggering response corresponding to the triggering request;
a digest generating unit, adapted to generate a digest of the content for approval;
a digest judging unit, adapted to judge whether the digest of the content for approval is consistent with the digest of the standard content carried in the triggering response, where the digest of the standard content corresponds to the standard content identifier; and
a service request sending unit, adapted to forward the service request if the digest judging unit determines that the digest of the content for approval is consistent with the digest of the standard content.

Accordingly, a network device provided in an embodiment of the present invention includes:
a service request receiving unit, adapted to receive a service request, where the service request carries a content for approval and a standard content identifier;
a digest generating unit, adapted to generate a digest of the content for approval;
a triggering request sending unit, adapted to send a triggering request, where the triggering request carries the digest of the content for approval and the standard content identifier;
a triggering response receiving unit, adapted to receive a triggering response corresponding to the triggering request;
a triggering response judging unit, adapted to judge whether the triggering response indicates that the digest of the content for approval is consistent with the digest of the standard content, where the digest of the standard content corresponds to the standard content identifier; and
a service request sending unit, adapted to forward the service request if the triggering response judging unit determines that the triggering response indicates consistency between the digest of the content for approval and the digest of the standard content.

Accordingly, a network device provided in an embodiment of the present invention includes:
a service request receiving unit, adapted to receive a service request, where the service request carries a content for approval and a standard content identifier;
a triggering request sending unit, adapted to send a triggering request, where the triggering request carries a content for approval and the standard content identifier;
a triggering response receiving unit, adapted to receive a triggering response corresponding to the triggering request;
a triggering response judging unit, adapted to judge whether the triggering response indicates that the digest of the content for approval is consistent with the digest of the standard content, where the digest of the standard content corresponds to the standard content identifier; and
a service request sending unit, adapted to forward the service request if the triggering response judging unit determines that the triggering response indicates consistency between the digest of the content for approval and the digest of the standard content.

Accordingly, a Mobile Data Service Platform (MDSP) provided in an embodiment of the present invention includes:
a content registration request receiving unit, adapted to receive a content registration request, where the content registration request carries a standard content;
an approving unit, adapted to approve the standard content;
a digest generating unit, adapted to generate and store a digest of the standard content after the standard content is approved;
a content identifier generating unit, adapted to generate and store a standard content identifier after the standard content is approved; and
a content registration response sending unit, adapted to send a content registration response, where the content registration response carries the standard content identifier.

Accordingly, a content delivery system provided in an embodiment of the present invention includes:
a network device, adapted to receive a service request and send a triggering request, where the service request carries a content for approval and a standard content identifier and the triggering request carries the standard content identifier;
an MDSP, adapted to: receive the triggering request and send a triggering response; after receiving the triggering request, judge whether the standard content is approved according to the standard content identifier; if the standard content is approved, add a digest of the standard content to the triggering response;
the network device, further adapted to: receive the triggering response, and judge whether the triggering response indicates that the standard content is approved; if the standard content is approved, generate a digest of the content for approval, and judge whether the digest of the content for approval is consistent with the digest of the standard content; if consistent, forward the service request.

A content delivery system provided in an embodiment of the present invention includes:
a network device, adapted to receive a service request and send a triggering request, where the service request carries a content for approval and a standard content identifier and the triggering request carries the content for approval and the standard content identifier;
an MDSP, adapted to: receive the triggering request; according to the standard content identifier, judge whether the standard content is approved; if the standard content is approved, generate a digest of the content for approval, and judge whether the digest of the content for approval is consistent with the pre-stored digest of the standard content; send a triggering response, where the triggering response carries a judgment result about whether the standard content is approved or carries both a judgment result about whether the standard content is approved and a judgment result about whether the digest of the content for approval is consistent with the digest of the standard content;
the network device, further adapted to: receive the triggering response, and judge whether the triggering response indicates that the standard content is approved and the digest of the standard content is consistent with the digest of the content for approval; if consistent, forward the service request.

A content delivery system provided in an embodiment of the present invention includes:
a network device, adapted to receive a service request, where the service request carries a content for approval and a standard content identifier; generate a digest of the content for approval; send a triggering request, where the triggering request carries a digest of the content for approval and the standard content identifier;
an MDSP, adapted to: receive the triggering request, search for the digest of the standard content corresponding to the standard content identifier; judge whether the digest of the content for approval is consistent with the digest of the standard content; send a triggering response, where the triggering response carries a judgment result indicating whether the digest of the content for approval is consistent with the digest of the standard content; and
the network device, further adapted to: receive the triggering response, and judge whether the triggering response indicates that the digest of the standard content is consistent with the digest of the content for approval; if consistent, forward the service request.

The foregoing technical solution provided in embodiments of the present invention shows that: in the process of registering the standard content, the digest of the standard content is saved; subsequently, when the SP/CP sends the content for approval, a digest of the content for approval is generated and compared with the digest of the standard content. If the digest of the content for approval is consistent with the digest of the standard content, the content for approval is consistent with the standard content approved, thus ensuring that the content which is approved can be sent to the user and ensuring authenticity and integrity of the content.

### Brief Description of the Drawings

Figure 1 is a flowchart of a content registration method in an embodiment of the present invention;
Figure 2 is a flowchart of a content delivery method in the first embodiment of the present invention;
Figure 3 is a flowchart of a content delivery method in the second embodiment of the present invention;
Figure 4 is a flowchart of a content delivery method in the third embodiment of the present invention;
Figure 5 is a flowchart of a content delivery method in the fourth embodiment of the present invention;
Figure 6 shows a structure of a network device in the first embodiment of the present invention;
Figure 7 shows a structure of a network device in the second embodiment of the present invention;
Figure 8 shows a structure of a network device in the third embodiment of the present invention;
Figure 9 shows a structure of a network device in the fourth embodiment of the present invention;
Figure 10 shows a structure of an MDSP in the first embodiment of the present invention;
Figure 11 shows a structure of an MDSP in the second embodiment of the present invention;
Figure 12 shows a structure of an MDSP in the third embodiment of the present invention;
Figure 13 shows a structure of an MDSP in the fourth embodiment of the present invention; and
Figure 14 shows a structure of a content delivery system in an embodiment of the present invention.

### Detailed Description of the Invention

For better understanding of the technical solution, objectives and merits of embodiments of the present invention, the embodiments of the present invention is hereinafter described in detail with reference to accompanying drawings and

### preferred embodiments.

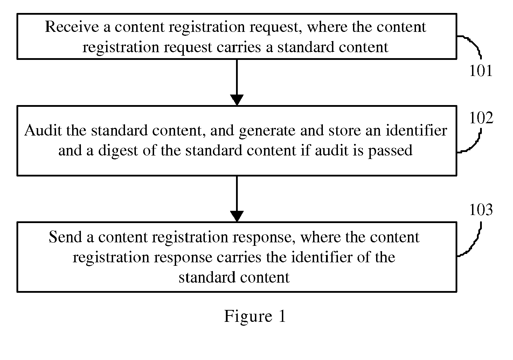

As shown in Figure 1, the content registration method provided in an embodiment of the present invention includes:
Step 101: Receive a content registration request, where the content registration request carries a standard content.
   The SP/CP needs to provide a content for the user and register the content first. Generally, an MDSP handles content registration. Therefore, the SP/CP sends a content registration request to the MDSP, where the content registration request carries the registered standard content, and the standard content is a content which the SP/CP requests to approve. After the content is approved, a corresponding identifier of the standard content is generated. In the subsequent process, the standard content identifier may serve to represent the content.
Step 102: Approve the standard content, and generate and store an identifier and a digest of the standard content if the approval is passed.

After the content registration request is received, the standard content in the request is approved to check whether the content complies with the preset rules, for example, whether the content contains any dirty remarks or violates laws. The approval is passed, if the content complies with the preset rules. An identifier and a digest of the standard content are generated, if the standard content is approved. The identifier of the standard content may be generated through the conventional art, and the digest of the standard content may be generated through a digest algorithm in the conventional art, for example, Hash algorithm based on a password mechanism, Security Hash Algorithm (SHA), Message Digest Algorithm 5 (MD5); or through a content feature retrieval method, namely, retrieving feature data such as color and sound from the content data and using it as a content digest.

In the practical application, the identifier and the digest of a standard content and the relevant CPID/SPID and ServiceID may be stored in one table entry.
Step 103: Send a content registration response, the content registration response carries a standard content identifier, if the approval is passed.

After the standard content is approved, a content registration response is sent no matter whether the approval is passed. The content registration response carries the standard content identifier, which is unique throughout the system, if the approval is passed. A cause code about approval failure is added to the content registration response so that the SP/CP knows why the approval is not passed after receiving the content registration response, and makes corresponding adjustment, if the approval is not passed.

In the process of registering the standard content in an embodiment of the present invention, the digest of the standard content is saved; therefore, when the SP/CP delivers the content for approval, the generated digest of the content for approval may be compared with the stored digest of the standard content. The content for approval is consistent with the standard content approved, If the digest of the content for approval is consistent with the digest of the standard content, thus ensuring that only the content which is approved can be delivered to the user and ensuring authenticity and integrity of the content.

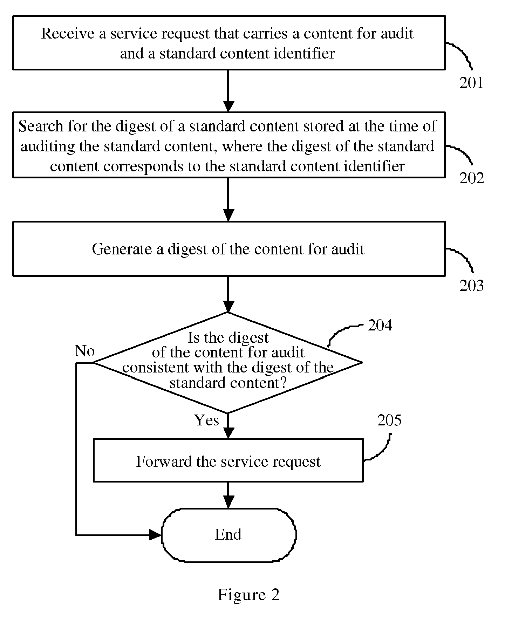

As shown in Figure 2, the content delivery method provided in the first embodiment of the present invention includes:
Step 201: Receive a service request that carries a content for approval and a standard content identifier.

When the SP/CP sends a registered content to a user, the SP/CP sends a service request and the service request carries a content for approval and a standard content identifier. The content for approval is delivered to the user, and the standard content identifier is adapted for authentication. Normally, the content for approval is the same as the standard content.
Step 202: Search for a digest of a standard content corresponding to the standard content identifier, where the digest of the standard content is stored at the time of approving the standard content and the standard content corresponds to the standard content identifier.

In the process of approving the standard content, a digest of the standard content is stored. Therefore, the stored digest of the standard content may be searched out according to the standard content identifier.
Step 203: Generate a digest of the content for approval.

In the practical application, the digest algorithm for generating the digest of the content for approval is the same as the digest algorithm for generating the digest of the standard content, which ensures that the digest generated for the same content is the same. For example, if the SHA is used to generate the digest of the standard content, the digest of the content for approval needs to be generated also through SHA. In the practical application, the digest of the content for approval may be generated by an MDSP or a service gateway.
Step 204: Judge whether the digest of the content for approval is consistent with the digest of the standard content; if consistent, proceed to Step 205; or else terminate the process of delivering the content.

Through comparison, if the digest of the content for approval is the same as the digest of the standard content, the content for approval is the same as the standard content, and the content for approval may be delivered.
Step 205: Forward the service request.

If the content for approval is consistent with the standard content, the service request is forwarded to the server which delivers the content, and the server which delivers the content sends the content that is approved to the user.

Therefore, in this embodiment, after a service request is received, a digest of the content for approval is generated and compared with the pre-stored digest of the standard content. The content is delivered if the digest of the content for approval is consistent with the digest of the standard content, thus ensuring authenticity and integrity of the content.

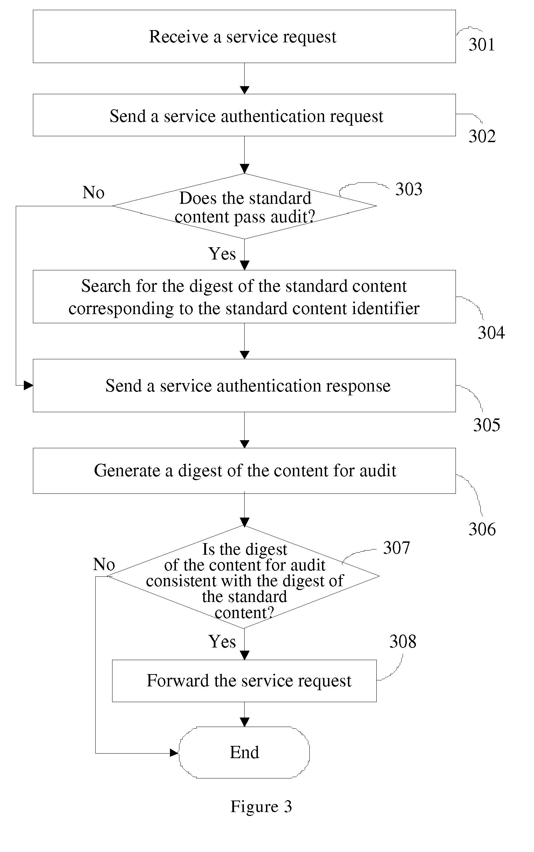

As shown in Figure 3, the content delivery method provided in the second embodiment of the present invention includes:
Step 301: Receive a service request, where the service request carries a content for approval and a standard content identifier.

In the practical application, the service request sent by the SP/CP is generally sent to a service gateway. For example, if the service request is a request for an SMS service, the service request is sent to the Internet Short Message Gateway (ISMG).
Step 302: Send a service authentication request, where the service authentication request carries a standard content identifier.

After receiving the service request, the service gateway sends a service authentication request to the MDSP, requesting the MDSP to search for the digest of the standard content corresponding to the standard content identifier. In the practical application, the triggering request may be newly added information, or a conventional service authentication request that is modified. For ease of description herein, a triggering request is uniformly a service authentication request, and the corresponding triggering response is a service authentication response. However, the embodiments of the present invention do not preclude the practice of using a modified message or newly added message as a triggering request.

After receiving the service authentication request, the MDSP authenticates the standard content. In order for the MDSP to authenticate the standard content, the service authentication request needs to carry a standard content identifier. In the practical application, the service authentication request may also carry relevant information such as SPID/CPID and ServiceID to authenticate other identification information which is related to the standard content and is carried together with the standard content in the service request. That is, if the integrity and authenticity of the content need to be authenticated, the SPID/CPID and ServiceID are not required.
Step 303: Judge whether the standard content is approved according to the standard content identifier; if the approval is passed, proceed to Step 304; or else go to Step 305.

After receiving the service authentication request, the MDSP checks whether any stored identifier matches the standard content identifier. The standard content is approved, if any identifier that matches the standard content identifier is found. The standard content does not pass the approval, if no such identifier is found. The standard content identifier is generated and stored by the MDSP. Therefore, the corresponding standard content identifier must be stored on the MDSP, if a standard content is approved; conversely, no identifier corresponding to the standard content is stored, if the standard content does not pass the approval. In the practical application, if the triggering message is a modified message or newly added message, this Step may be omitted because the digest of a standard content is stored on the MDSP only if the standard content is approved.
Step 304: Search for a digest of a standard content corresponding to the standard content identifier, where the digest of the standard content is stored at the time of approving the standard content.

In the process of approving the standard content, a digest of the standard content is generated and stored. Therefore, the digest of the standard content corresponding to the standard content identifier may be searched out.
Step 305: Send a service authentication response.

A service authentication response is sent no matter whether the approval is passed. If the standard content does not pass the approval, the service authentication response carries the corresponding information, telling the service gateway that the standard content does not pass the approval is failed for other reasons. If the standard content is approved, the service authentication response carries the digest of the standard content.
Step 306: Generate a digest of the content for approval.

The digest algorithm for generating the digest of the content for approval is the same as the digest algorithm for generating the digest of the standard content.
Step 307: Judge whether the digest of the content for approval is consistent with the digest of the standard content carried in the service authentication response; proceed to Step 308, if consistent; or else terminate the process of delivering the content.

After the digest of the content for approval is generated, a comparison is made to check whether the digest of the content for approval is consistent with the digest of the standard content. The content for approval is the same as the standard content, if consistent. The same algorithm is applied to generate the digest of the content for approval and the digest of the standard content. Therefore, the generated digest must also be consistent, if the content for approval is consistent with the standard content.
Step 308: Forward the service request.

The digest of the content for approval is consistent with the digest of the standard content, so it is definite that the content for approval is the same as the standard content that is approved. Therefore, the service request is forwarded to proceed with the remaining process of delivering the content.

Therefore, in this embodiment, after receiving the service request, the service gateway sends a service authentication request to the MDSP; after receiving the digest of the standard content sent by the MDSP, the service gateway generates a digest of the content for approval, and compares it with the digest of the standard content. The content for approval is delivered if the digest of the content for approval is consistent with the digest of the standard content, thus ensuring authenticity and integrity of the content.

In the practical application, the following operation occurs before the service gateway generates a digest of the content for approval (Step 306):

Judge whether the service authentication response indicates that the standard content is approved; proceed to Step 306 where a digest of the content for approval is generated if the standard content is approved; or terminate the process of delivering the content if the standard content does not pass the approval.

Before generating a digest of the content for approval, the service gateway judges whether the service authentication response indicates that the standard content is approved. The process proceeds to the subsequent Steps, if the approval is passed; otherwise, the process of delivering the content is terminated, thus reducing the occupation of system resources required for the service gateway to generate a digest of the content for approval and imapproving the efficiency of the service gateway.

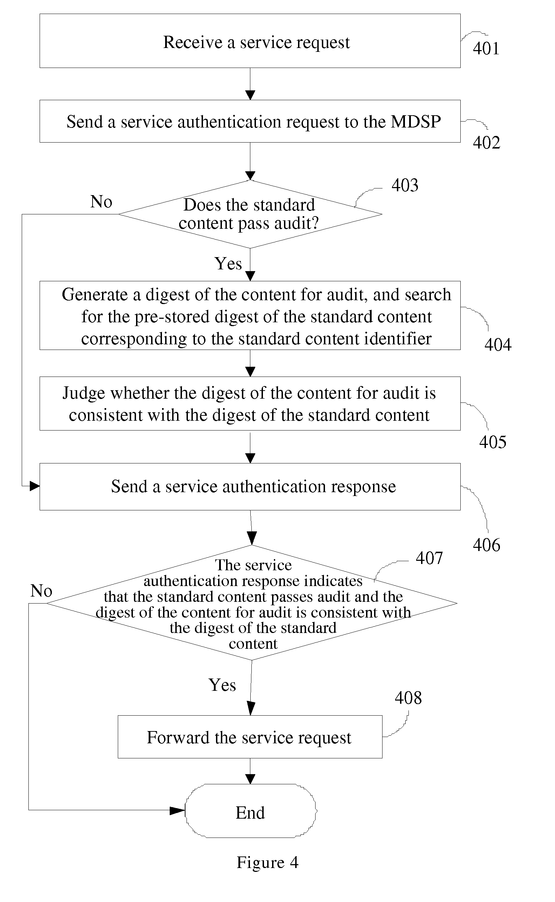

As shown in Figure 4, the content delivery method provided in the third embodiment of the present invention includes:
Step 401: Receive a service request, where the service request carries a content for approval and a standard content identifier.
Step 402: Send a service authentication request to the MDSP, where the service authentication request carries a content for approval and a standard content identifier.
Step 403: Judge whether the standard content is approved according to the standard content identifier; if the approval is passed, proceed to Step 404; or else go to Step 406.
Step 404: Generate a digest of the content for approval, and search for the pre-stored digest of the standard content corresponding to the standard content identifier.
Step 405: Judge whether the digest of the content for approval is consistent with the digest of the standard content.

In the practical application, this Step may be performed on the MDSP or the service gateway. In this embodiment, this Step is performed on the MDSP. The MDSP needs to send the digest of the content for approval and the digest of the standard content to the service gateway, which is not detailed here any further, if this Step is performed on the service gateway.
Step 406: Send a service authentication response.

If the standard content is approved and the digest of the content for approval is consistent with the digest of the standard content, the service authentication response indicates authentication success. If the standard content does not pass the approval; or if the standard content is approved but the digest of the content for approval is different from the digest of the standard content, the authentication fails, and the service authentication response carries the information indicative of the cause for authentication failure.
Step 407: Judge whether the authentication response indicates that the standard content is approved and the digest of the content for approval is consistent with the digest of the standard content; and, if so, proceed to Step 408; or else terminate the process of delivering the content.
Step 408: Forward the service request.

In this embodiment, both the digest of the content for approval and the digest of the standard content are generated by the MDSP, and the comparison is performed at the MDSP. The service gateway only needs to receive the judgment result sent by the MDSP, thus reducing the workload of the service gateway. Moreover, the content for approval is delivered only if the standard content is approved and the digest of the content for approval is consistent with the digest of the standard content, thus ensuring authenticity and integrity of the content.

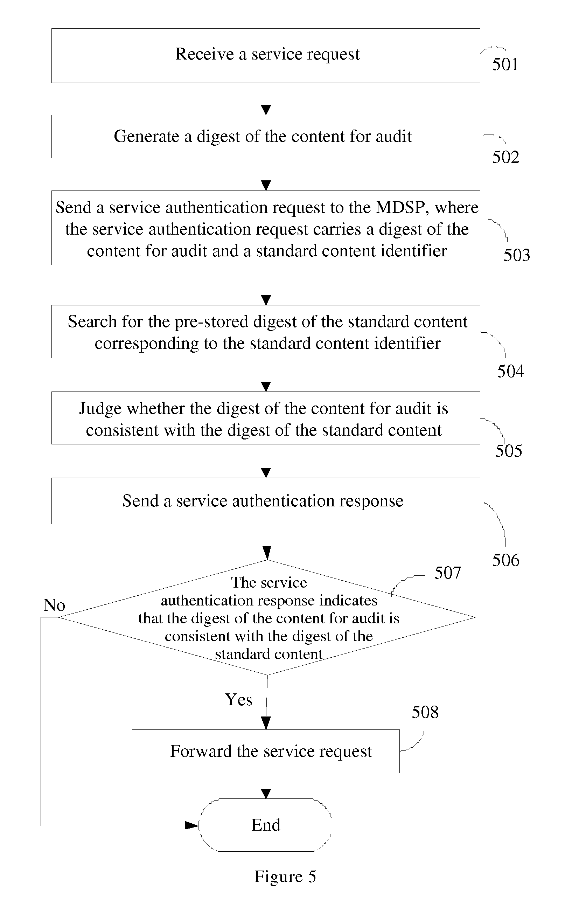

As shown in Figure 5, the content delivery method provided in the fourth embodiment of the present invention includes:
Step 501: Receive a service request, where the service request carries a content for approval and a standard content identifier.
Step 502: Generate a digest of the content for approval.
Step 503: Send a service authentication request to the MDSP, where the service authentication request carries a digest of the content for approval and a standard content identifier.
Step 504: Search for the pre-stored digest of the standard content corresponding to the standard content identifier.

In the process of approving the standard content, a digest of the standard content is generated and stored. Therefore, the digest of the standard content corresponding to the standard content identifier may be searched out.
Step 505: Judge whether the digest of the content for approval is consistent with the digest of the standard content.
Step 506: Send a service authentication response.

A service authentication response is sent to the service gateway regardless of the consistency. Therefore, the service gateway may perform the corresponding operations according to the information in the service authentication response.
Step 507: Judge whether the service authentication response indicates that the digest of the content for approval is consistent with the digest of the standard content; proceed to Step 508, if consistent; or else terminate the process of delivering the content.
Step 508: Forward the service request.

In this embodiment, the digest of the content for approval is generated by the service gateway, and the digest of the standard content is generated by the MDSP, and the comparison is performed at the MDSP. The service gateway needs to receive the judgment result sent by the MDSP, thus reducing the workload of the service gateway. Moreover, the content for approval is delivered if the standard content is approved and the digest of the content for approval is consistent with the digest of the standard content, thus ensuring authenticity and integrity of the content.

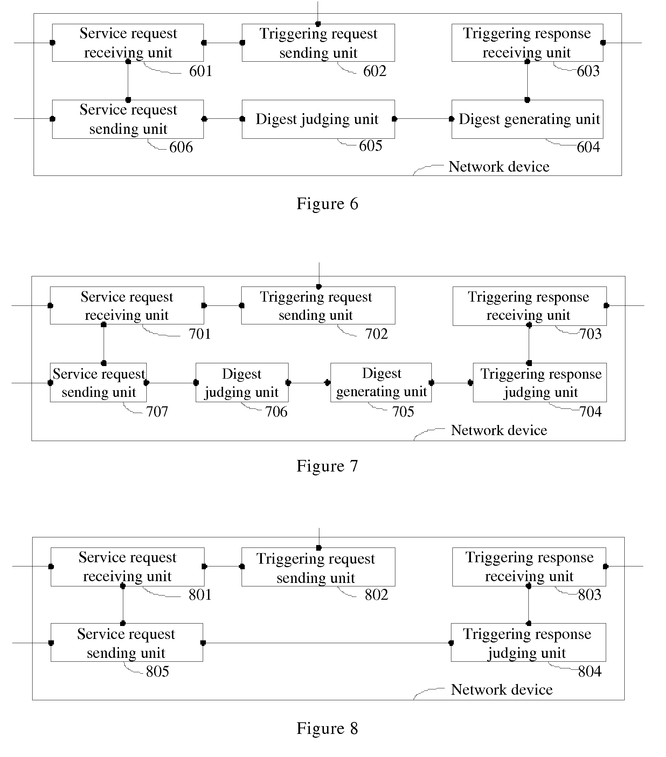

As shown in Figure 6, the network device provided in the first embodiment of the present invention includes:
a service request receiving unit 601, adapted to receive a service request, where the service request carries a content for approval and a standard content identifier;
a triggering request sending unit 602, adapted to send a triggering request, where the triggering request carries the standard content identifier, or may be a service authentication request in the practical application;
a triggering response receiving unit 603, adapted to receive a triggering response corresponding to the triggering request, where the triggering response may be a service authentication response accordingly;
a digest generating unit 604, adapted to generate a digest of the content for approval;
a digest judging unit 605, adapted to judge whether the digest of the content for approval is consistent with the digest of the standard content carried in the triggering response, where the digest of the standard content corresponds to the standard content identifier; and
a service request sending unit 606, adapted to forward the service request if the digest judging unit determines that the digest of the content for approval is consistent with the digest of the standard content.

The network device in this embodiment may be a service gateway in the content delivery system. For example, if the content delivery system is a SMS delivery system, the network device provided in this embodiment may serve as an ISMG. As described above, the network device in this embodiment may generate a digest of the content for approval, make a comparison to check whether the digest of the content for approval is consistent with the received digest of the standard content, and deliver the content for approval if the two digests are consistent, thus ensuring authenticity and integrity of the content. In the conventional art, the service gateway only needs to read the message header of the service request message, and obtain information such as user identifier, and SPID/CPID. In this embodiment of the present invention, in order to generate a digest of the content for approval, the network device needs to be capable of reading the message body, so that the network device is capable of reading the content for approval in the message body and generating a digest of the content for approval.

As shown in Figure 7, the network device in the second embodiment of the present invention includes:
a service request receiving unit 701, adapted to receive a service request, where the service request carries a content for approval and a standard content identifier;
a triggering request sending unit 702, adapted to send a triggering request, where the triggering request carries the standard content identifier;
a triggering response receiving unit 703, adapted to receive a triggering response corresponding to the triggering request;
a triggering response judging unit 704, adapted to judge whether the triggering response indicates that the standard content is approved, where the standard content corresponds to the standard content identifier;
a digest generating unit 705, adapted to generate a digest of the content for approval if the triggering response judging unit determines that the triggering response indicates that the standard content is approved.
a digest judging unit 706, adapted to judge whether the digest of the content for approval is consistent with the digest of the standard content carried in the triggering response; and
a service request sending unit 707, adapted to forward the service request if the digest judging unit determines that the digest of the content for approval is consistent with the digest of the standard content.

Before generating a digest of the content for approval, the network device in this embodiment judges whether the triggering response indicates that the standard content is approved. The process proceeds to the subsequent operations, if the approval is passed; otherwise, no more operation is performed, thus reducing the occupation of system resources required for the service gateway to generate a digest of the content for approval and improving the efficiency of the service gateway.

As shown in Figure 8, the network device in the third embodiment of the present invention includes:
a service request receiving unit 801, adapted to receive a service request, where the service request carries a content for approval and a standard content identifier;
a triggering request sending unit 802, adapted to send a triggering request, where the triggering request carries a content for approval and a standard content identifier;
a triggering response receiving unit 803, adapted to receive a triggering response corresponding to the triggering request;
a triggering response judging unit 804, adapted to judge whether the triggering response indicates that the digest of the content for approval is consistent with the digest of the standard content, where the digest of the standard content corresponds to the standard content identifier; and
a service request sending unit 805, adapted to forward the service request if the triggering response judging unit determines that the triggering response indicates consistency between the digest of the content for approval and the digest of the standard content.

In this embodiment, it is not necessary for the network device to generate a digest of the content for approval or a digest of the standard content. The network device only needs to receive the judgment result, thus reducing the workload of the service gateway. Moreover, the content for approval is delivered if the standard content is approved and the digest of the content for approval is consistent with the digest of the standard content, thus ensuring authenticity and integrity of the content.

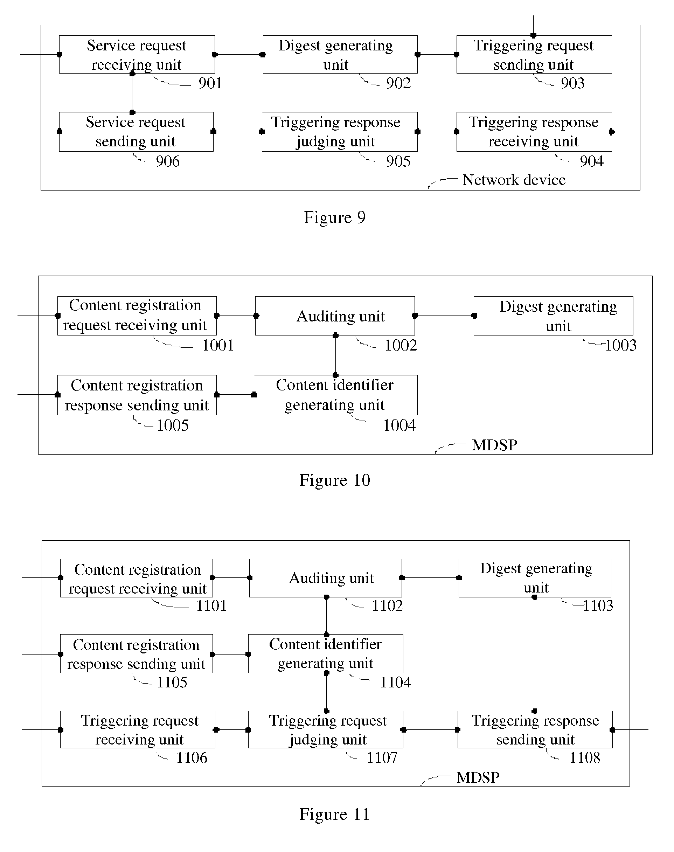

As shown in Figure 9, the network device in the fourth embodiment of the present invention includes:
a service request receiving unit 901, adapted to receive a service request, where the service request carries a content for approval and a standard content identifier;
a digest generating unit 902, adapted to generate a digest of the content for approval;
a triggering request sending unit 903, adapted to send a triggering request, where the triggering request carries a digest of the content for approval and a standard content identifier;
a triggering response receiving unit 904, adapted to receive a triggering response corresponding to the triggering request;
a triggering response judging unit 905, adapted to judge whether the triggering response indicates that the digest of the content for approval is consistent with the digest of the standard content, where the digest of the standard content corresponds to the standard content identifier; and
a service request sending unit 906, adapted to forward the service request if the triggering response judging unit determines that the triggering response indicates consistency between the digest of the content for approval and the digest of the standard content.

In this embodiment, the network device generates a digest of the content for approval. Therefore, the apparatus for receiving the triggering request does not need to generate a digest of the content for approval, but compares the received digest of the content for approval with the found digest of the standard content, thus reducing the workload of the apparatus for receiving the triggering request.

As shown in Figure 10, the MDSP provided in the first embodiment of the present invention includes:
a content registration request receiving unit 1001, adapted to receive a content registration request, where the content registration request carries a standard content;
an approving unit 1002, adapted to approve the standard content;
a digest generating unit 1003, adapted to generate and store a digest of the standard content after the standard content is approved;
a content identifier generating unit 1004, adapted to generate and store a standard content identifier after the standard content is approved; and
a content registration response sending unit 1005, adapted to send a content registration response, where the content registration response carries the standard content identifier.

In this embodiment of using the MDSP, in the process of registering the standard content, the digest of the standard content is saved; therefore, when the SP/CP delivers the content for approval, a digest of the content for approval may be generated and compared with the digest of the standard content. The content for approval is consistent with the standard content approved, if the digest of the content for approval is consistent with the digest of the standard content, thus ensuring that only the content which is approved can be delivered to the user and ensuring authenticity and integrity of the content.

As shown in Figure 11, the MDSP in the second embodiment of the present invention includes:
a content registration request receiving unit 1101, adapted to receive a content registration request, where the content registration request carries a standard content;
an approving unit 1102, adapted to approve the standard content;
a digest generating unit 1103, adapted to generate and store a digest of the standard content after the standard content is approved;
a content identifier generating unit 1104, adapted to generate and store a standard content identifier after the standard content is approved;
a content registration response sending unit 1105, adapted to send a content registration response, where the content registration response carries the standard content identifier.
a triggering request receiving unit 1106, adapted to receive a triggering request, where the triggering request carries the standard content identifier;
a triggering request judging unit 1107, adapted to judge whether the standard content is approved according to the standard content identifier; and
a triggering response sending unit 1108, adapted to: send a triggering response, where the triggering response carries a digest of the standard content if the authenticating unit determines that the standard content is approved.

In this embodiment of using the MDSP, after a triggering request is received and the standard content is authenticated, it is appropriate to send the digest of the standard content generated at the time of approving the standard content. Therefore, the corresponding network entity may compare the digest of the standard content with the digest of the content for approval, and the content for approval is delivered only if the digest of the standard content is consistent with the digest of the content for approval, thus ensuring authenticity and integrity of the content.

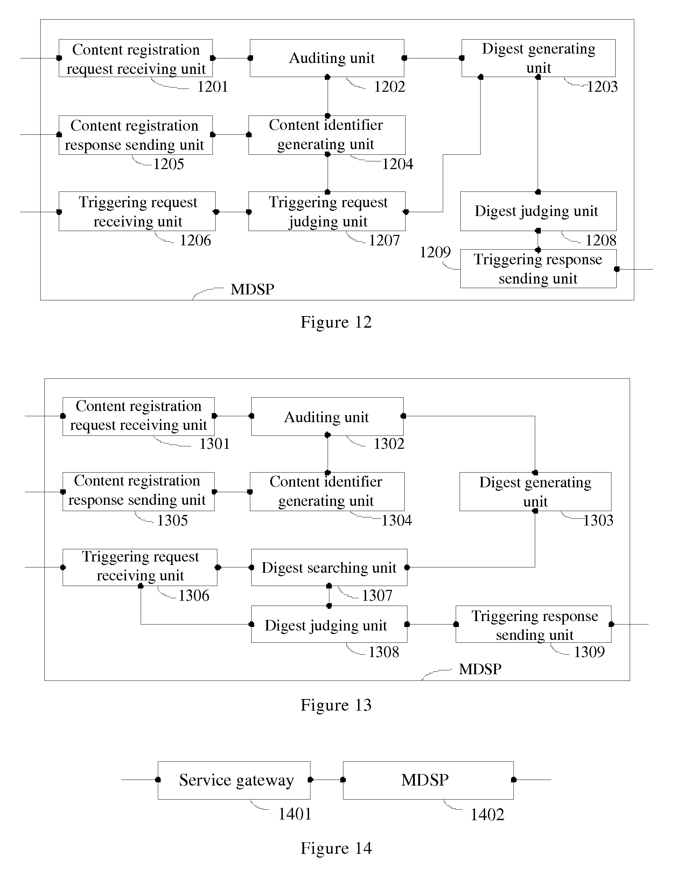

As shown in Figure 12, the MDSP in the third embodiment of the present invention includes:
a content registration request receiving unit 1201, adapted to receive a content registration request, where the content registration request carries a standard content;
an approving unit 1202, adapted to approve the standard content;
a digest generating unit 1203, adapted to generate and store a digest of the standard content after the standard content is approved;
a content identifier generating unit 1204, adapted to generate and store a standard content identifier after the standard content is approved;
a content registration response sending unit 1205, adapted to send a content registration response, where the content registration response carries the standard content identifier;
a triggering request receiving unit 1206, adapted to receive a triggering request, where the triggering request carries the standard content identifier and the content for approval;
a triggering request judging unit 1207, adapted to judge whether the standard content is approved according to the standard content identifier;
a digest generating unit 1203, adapted to generate a digest of the content for approval if the triggering request judging unit determines that the standard content is approved;
a digest judging unit 1208, adapted to judge whether the digest of the content for approval is consistent with the digest of the standard content stored by the digest generating unit; and
a triggering response sending unit 1209, adapted to send a triggering response, where the triggering response carries the judgment results of the two judging units.

As described above, in this embodiment of using the MDSP, the digest of the content for approval and the digest of the standard content may be generated and compared; the comparison result is added in the triggering response. Therefore, the network device decides whether to deliver the content for approval by judging the triggering response, thus reducing the data quantity to be processed by the network device. Moreover, the content for approval is delivered if the digest of the content for approval is consistent with the digest of the standard content, thus ensuring authenticity and integrity of the content.

As shown in Figure 13, the MDSP in the fourth embodiment of the present invention includes:
a content registration request receiving unit 1301, adapted to receive a content registration request, where the content registration request carries a standard content;
an approving unit 1302, adapted to approve the standard content;
a digest generating unit 1303, adapted to generate and store a digest of the standard content after the standard content is approved;
a content identifier generating unit 1304, adapted to generate and store a standard content identifier after the standard content is approved;
a content registration response sending unit 1305, adapted to send a content registration response, where the content registration response carries the standard content identifier;
a triggering request receiving unit 1306, adapted to receive a triggering request, where the triggering request carries the digest of the content for approval and the standard content identifier;
a digest searching unit 1307, adapted to search for the digest of the standard content corresponding to the standard content identifier;
the digest of the standard content is generated and stored at the time of approving the standard content;
a digest judging unit 1308, adapted to judge whether the digest of the content for approval is consistent with the digest of the standard content; and
a triggering response sending unit 1309, adapted to: send a triggering response, where the triggering response carries the information indicating consistency between the digest of the content for approval and the digest of the standard content if the digest judging unit determines that the digest of the content for approval is consistent with the digest of the standard content, or carries the information indicating inconsistency between the digest of the content for approval and the digest of the standard content if the digest judging unit determines that the digest of the content for approval is inconsistent with the digest of the standard content.

In this embodiment, the MDSP compares the received digest of the content for approval with the found digest of the standard content directly without generating the digest of the content for approval, thus reducing the workload of the MDSP.

As shown in Figure 14, the content delivery system provided in the first embodiment of the present invention includes:
a service gateway 1401, adapted to receive a service request and send a triggering response request, where the service request carries a content for approval and a standard content identifier and the triggering response request carries the standard content identifier;
an MDSP 1402, adapted to: receive the triggering response request and send a triggering response; after receiving the triggering response request, judge whether the standard content is approved according to the standard content identifier; if the standard content is approved, add a digest of the standard content to the triggering response;
the service gateway 1401, further adapted to: receive the triggering response, and judge whether the standard content is approved; if the standard content is approved, generate a digest of the content for approval, and judge whether the digest of the content for approval is consistent with the digest of the standard content; if consistent, forward the service request.

Therefore, in this embodiment, after receiving the service request, the service gateway sends a triggering response request to the MDSP; after receiving the digest of the standard content sent by the MDSP, the service gateway generates a digest of the content for approval, and compares it with the digest of the standard content. The content for approval is delivered if the digest of the content for approval is consistent with the digest of the standard content, thus ensuring authenticity and integrity of the content.

As shown in Figure 14, the content delivery system provided in the second embodiment of the present invention includes:
a service gateway 1401, adapted to receive a service request and send a triggering response request, where the service request carries a content for approval and a standard content identifier and the triggering response request carries the content for approval and the standard content identifier;
an MDSP 1402, adapted to: receive the triggering response request; according to the standard content identifier, judge whether the standard content is approved; if the standard content is approved, generate a digest of the content for approval, and judge whether the digest of the content for approval is consistent with the pre-stored digest of the standard content; send a triggering response, where the triggering response carries a judgment result about whether the standard content is approved or carries both a judgment result about whether the standard content is approved and a judgment result about whether the digest of the content for approval is consistent with the digest of the standard content;
the service gateway 1401, further adapted to: receive the triggering response, and judge whether the triggering response indicates that the standard content is approved and the digest of the standard content is consistent with the digest of the content for approval; if consistent, forward the service request.

In this embodiment, both the digest of the content for approval and the digest of the standard content are generated by the MDSP, and the comparison is performed at the MDSP. The service gateway needs to receive the judgment result sent by the MDSP, thus reducing the workload of the service gateway. Moreover, the content for approval is delivered if the standard content is approved and the digest of the content for approval is consistent with the digest of the standard content, thus ensuring authenticity and integrity of the content.

As shown in Figure 14, the content delivery system provided in the third embodiment of the present invention includes:
a network device 1401, adapted to receive a service request, where the service request carries a content for approval and a standard content identifier; generate a digest of the content for approval; send a triggering request, where the triggering request carries a digest of the content for approval and the standard content identifier;
an MDSP 1402, adapted to: receive the triggering request, search for the digest of the standard content corresponding to the standard content identifier; judge whether the digest of the content for approval is consistent with the digest of the standard content; send a triggering response, where the triggering response carries a judgment result indicating whether the digest of the content for approval is consistent with the digest of the standard content; and
the network device 1401, further adapted to: receive the triggering response, and judge whether the triggering response indicates that the digest of the standard content is consistent with the digest of the content for approval; if consistent, forward the service request.

In this embodiment, the digest of the content for approval is generated by the service gateway, and the digest of the standard content is generated by the MDSP, and the comparison is performed at the MDSP. The service gateway only needs to receive the judgment result sent by the MDSP, thus reducing the workload of the service gateway. Moreover, the content for approval is delivered if the standard content is approved and the digest of the content for approval is consistent with the digest of the standard content, thus ensuring authenticity and integrity of the content.

In the practical application, the MDSP of the content delivery system needs also to approve the standard content. Therefore, the MDSP 1402 is further adapted to: receive a content registration request that carries the standard content, approve the standard content, and send a content registration response; and generate and store the digest and identifier of the standard content if the standard content is approved, where the content registration response carries the standard content identifier.

The digest of the standard content is saved at the time approving the content. Therefore, the generated digest of the content for approval can be compared with the stored digest of the standard content at the time of delivering the content. The content for approval is delivered if the two digests are consistent, thus ensuring authenticity and integrity of the content.

As described above, in the process of registering the standard content in an embodiment of the present invention, the digest of the standard content is saved; therefore, when the SP/CP delivers the content for approval, the generated digest of the content for approval may be compared with the stored digest of the standard content. The content for approval is consistent with the standard content approved, if the digest of the content for approval is consistent with the digest of the standard content, thus ensuring that only the content which is approved can be delivered to the user and ensuring authenticity and integrity of the content. Further, both the service gateway and the MDSP may generate a digest of the content for approval and judge the consistency between the digest of the content for approval and the digest of the standard content, thus improving the flexibility of using the network.

It is understandable to those skilled in the art that all or part Steps of the preceding embodiments can be implemented by hardware following instructions of programs. The programs may be stored in a computer readable storage medium. When the programs are executed, the Steps in the foregoing embodiments are executed, and the storage medium may be any medium that can store program codes such as Read-Only Memory (ROM), Random Access Memory (RAM), magnetic disk and compact disk.

The above is a detailed description of a content delivery method and system, a network device and an MDSP in embodiments of the present invention. Although the invention has been described through some exemplary embodiments, the invention is not limited to such embodiments. It is apparent that those skilled in the art can make various modifications and variations to the invention without departing from the spirit and scope of the invention.

## Claims

1. A content approving method, comprising:
receiving a content registration request, wherein the content registration request carries a standard content;
approving the standard content, and generating and storing an identifier and a digest of the standard content if the approval is passed; and
sending a content registration response, wherein the content registration response carries the identifier of the standard content.

2. The content registration method of claim 1, wherein the digest of the standard content is calculated and generated through a preset digest algorithm.

3. A content delivery method, comprising:
receiving a service request that carries a content for approval and a standard content identifier;
searching for a digest of a standard content corresponding to the standard content identifier, wherein the digest of the standard content is stored at the time of approving the standard content and the standard content corresponds to the standard content identifier;
generating a digest of the content for approval; and
judging whether the digest of the content for approval is consistent with the digest of the standard content, and if consistent, forwarding the service request.

4. The content delivery method of claim 3, wherein:
the digest of the standard content corresponding to the standard content identifier is searched out by a Mobile Data Service Platform (MDSP) as requested by a service gateway, and more particularly:
after receiving the service request, the service gateway sends a triggering request carrying the standard content identifier; and
the MDSP receives the triggering request and searches for the digest of the standard content according to the standard content identifier.

5. The content delivery method of claim 4, wherein:
the digest of the content for approval is generated by the service gateway; and
before the service gateway judges whether the digest of the content for approval is consistent with the digest of the standard content, the method further comprises:
receiving the digest of the standard content from the MDSP, wherein the digest of the standard content is sent through a triggering response.

6. The content delivery method of claim 4, wherein:
the digest of the content for approval is generated by the service gateway; and
before the MDSP judges whether the digest of the content for approval is consistent with the digest of the standard content, the method further comprises:
receiving the digest of the content for approval from the service gateway.

7. The content delivery method of claim 4, wherein:
the triggering request further carries the content for approval; and
the MDSP generates the digest of the content for approval according to the content for approval.

8. The content delivery method of claim 7, wherein:
before the service gateway judges whether the digest of the content for approval is consistent with the digest of the standard content, the method further comprises:
receiving the digest of the content for approval from the MDSP, wherein the digest of the content for approval is sent through a triggering response.

9. The content delivery method of claim 7, wherein:
the MDSP judges whether the digest of the content for approval is consistent with the digest of the standard content; and
the MDSP triggers the service gateway to forward the service request, if consistent.

10. The content delivery method of any of claim 3 to claim 9, wherein:
the digest of the content for approval is generated through a preset digest algorithm, and the preset digest algorithm is the same as the digest algorithm for generating the digest of the standard content.

11. A network device, comprising:
a service request receiving unit, adapted to receive a service request, wherein the service request carries a content for approval and a standard content identifier;
a triggering request sending unit, adapted to send a triggering request, wherein the triggering request carries the standard content identifier;
a triggering response receiving unit, adapted to receive a triggering response corresponding to the triggering request;
a digest generating unit, adapted to generate a digest of the content for approval;
a digest judging unit, adapted to judge whether the digest of the content for approval is consistent with the digest of the standard content carried in the triggering response, wherein the digest of the standard content corresponds to the standard content identifier; and
a service request sending unit, adapted to forward the service request if the digest judging unit determines that the digest of the content for approval is consistent with the digest of the standard content.

12. The network device of claim 11, wherein:
if the triggering response is a service authentication response, the network device further comprises:
a service authentication response judging unit, adapted to judge whether the service authentication response indicates that the standard content is approved, and trigger the digest generating unit to generate the digest of the content for approval if the standard content is approved.

13. A network device, comprising:
a service request receiving unit, adapted to receive a service request, wherein the service request carries a content for approval and a standard content identifier;
a digest generating unit, adapted to generate a digest of the content for approval;
a triggering request sending unit, adapted to send a triggering request, wherein the triggering request carries the digest of the content for approval and the standard content identifier;
a triggering response receiving unit, adapted to receive a triggering response corresponding to the triggering request;
a triggering response judging unit, adapted to judge whether the triggering response indicates that the digest of the content for approval is consistent with the digest of the standard content, wherein the digest of the standard content corresponds to the standard content identifier; and
a service request sending unit, adapted to forward the service request if the triggering response judging unit determines that the triggering response indicates consistency between the digest of the content for approval and the digest of the standard content.

14. A network device, comprising:
a service request receiving unit, adapted to receive a service request, wherein the service request carries a content for approval and a standard content identifier;
a triggering request sending unit, adapted to send a triggering request, wherein the triggering request carries the content for approval and the standard content identifier;
a triggering response receiving unit, adapted to receive a triggering response corresponding to the triggering request;
a triggering response judging unit, adapted to judge whether the triggering response indicates that the digest of the content for approval is consistent with the digest of the standard content, wherein the digest of the standard content corresponds to the standard content identifier; and
a service request sending unit, adapted to forward the service request if the triggering response judging unit determines that the triggering response indicates consistency between the digest of the content for approval and the digest of the standard content.

15. A Mobile Data Service Platform (MDSP), comprising:
a content registration request receiving unit, adapted to receive a content registration request, wherein the content registration request carries a standard content;
an approving unit, adapted to approve the standard content;
a digest generating unit, adapted to generate and store a digest of the standard content after the standard content is approved;
a content identifier generating unit, adapted to generate and store a standard content identifier after the standard content is approved; and
a content registration response sending unit, adapted to send a content registration response, wherein the content registration response carries the standard content identifier.

16. The MDSP of claim 15, further comprising:
a triggering request receiving unit, adapted to receive a triggering request, wherein the triggering request carries the standard content identifier;
an approval judging unit, adapted to judge whether the standard content is approved according to the standard content identifier; and
a triggering response sending unit, adapted to send a triggering response, wherein the triggering response carries a digest of the standard content if the approval judging unit determines that the standard content is approved.

17. The MDSP of claim 16, wherein:
the triggering request received by the triggering request receiving unit further carries a content for approval;
the digest generating unit is further adapted to generate a digest of the content for approval if the approval judging unit determines that the standard content is approved;
the MDSP further comprises:
a digest judging unit, adapted to judge whether the digest of the content for approval is consistent with the digest of the standard content stored by the digest generating unit; and
the triggering response sent by the triggering response sending unit carries: a judgment result of the approval judging unit, or both a judgment result of the approval judging unit and a judgment result of the digest judging unit.

18. The MDSP of claim 15, further comprising:
a triggering request receiving unit, adapted to receive a triggering request, wherein the triggering request carries the digest of the content for approval and the standard content identifier;
a digest searching unit, adapted to search for the digest of the standard content corresponding to the standard content identifier;
a digest judging unit, adapted to judge whether the digest of the content for approval is consistent with the digest of the standard content; and
a triggering response sending unit, adapted to send a triggering response, wherein the triggering response carries information indicating consistency between the digest of the content for approval and the digest of the standard content if the digest judging unit determines that the digest of the content for approval is consistent with the digest of the standard content, or carries information indicating inconsistency between the digest of the content for approval and the digest of the standard content if the digest judging unit determines that the digest of the content for approval is inconsistent with the digest of the standard content.

19. A content delivery system, comprising:
a network device, adapted to receive a service request and send a triggering request, wherein the service request carries a content for approval and a standard content identifier and the triggering request carries the standard content identifier;
a Mobile Data Service Platform (MDSP), adapted to: receive the triggering request and send a triggering response; after receiving the triggering request, judge whether the standard content is approved according to the standard content identifier; if the standard content is approved, add a digest of the standard content to the triggering response; and
the network device, further adapted to: receive the triggering response, and judge whether the triggering response indicates that the standard content is approved; if the standard content is approved, generate a digest of the content for approval, and judge whether the digest of the content for approval is consistent with the digest of the standard content; if consistent, forward the service request.

20. A content delivery system, comprising:
a network device, adapted to receive a service request and send a triggering request, wherein the service request carries a content for approval and a standard content identifier and the triggering request carries the content for approval and the standard content identifier;
a Mobile Data Service Platform (MDSP), adapted to: receive the triggering request; according to the standard content identifier, judge whether the standard content is approved; if the standard content is approved, generate a digest of the content for approval, and judge whether the digest of the content for approval is consistent with the pre-stored digest of the standard content; send a triggering response, wherein the triggering response carries a judgment result about whether the standard content is approved or carries both a judgment result about whether the standard content is approved and a judgment result about whether the digest of the content for approval is consistent with the digest of the standard content; and
the network device, further adapted to: receive the triggering response, and judge whether the triggering response indicates that the standard content is approved and the digest of the standard content is consistent with the digest of the content for approval; if consistent, forward the service request.

21. A content delivery system, comprising:
a network device, adapted to receive a service request, wherein the service request carries a content for approval and a standard content identifier; generate a digest of the content for approval; send a triggering request, wherein the triggering request carries a digest of the content for approval and the standard content identifier;
a Mobile Data Service Platform (MDSP), adapted to: receive the triggering request, and search for the digest of the standard content corresponding to the standard content identifier; judge whether the digest of the content for approval is consistent with the digest of the standard content; send a triggering response, wherein the triggering response carries a judgment result indicating whether the digest of the content for approval is consistent with the digest of the standard content; and
the network device, further adapted to: receive the triggering response, and judge whether the triggering response indicates that the digest of the standard content is consistent with the digest of the content for approval; if consistent, forward the service request.
